# DEMANDE DE BREVET EUROPEEN

(11) **EP 2 348 210 A1**
(43) Date de publication de la demande: **27.07.2011**
(21) Numéro de dépôt: 11151860.1
(22) Date de dépôt: 24.01.2011
(51) Int. Cl.: F02C 7/14, F02K 3/02

(54) **Propulseur pour aéeronef comportant un dispositif de refroidissement instalé dans la nacelle**

(30) Priorité: 26.01.2010 FR 1050507
(71) Demandeur: Airbus Operations (S.A.S.), 31060 Toulouse (FR)
(72) Inventeur: Rinjonneau, Christelle, 31300, Toulouse (FR); Guillaume, Pierre, 31200, Toulouse (FR)
(74) Mandataire: Fourcade, Emmanuelle

(57) **Abrégé**

L'invention concerne un propulseur (1) pour aéronef comportant une turbomachine (8) logée dans une nacelle (10) et un refroidisseur (45) apte à être traversé par un fluide chaud destiné à être refroidi par échange thermique avec un air froid externe audit refroidisseur. Le propulseur (1) comporte une veine d'air (13)(13b) apte à conduire un air pressurisé vers un conduit d'air (20) réalisé entre une paroi externe (6) et une paroi interne (60) de la nacelle (10). Le refroidisseur comporte un moyen de refroidissement volumique (14) positionné dans le conduit d'air (20) et un moyen de refroidissement surfacique (15), non connexe audit moyen de refroidissement volumique, disposé au niveau d'une paroi externe (6, 101) de l'aéronef.

## Description

La présente invention concerne un propulseur d'aéronef de type à turbomachine. Plus précisément, l'invention concerne un dispositif de refroidissement pour propulseur.

Dans le domaine aéronautique, un grand nombre de propulseurs d'aéronefs comportent une turbomachine, logé dans une nacelle.

On peut citer le cas, par exemple, des propulseurs de type turbofan pour lesquels la turbomachine entraîne au moins un rotor situé à l'intérieur de la nacelle. On peut aussi citer le cas des propulseurs de type « propfan » ou « open rotor » pour lesquels la turbomachine entraîne deux rotors contrarotatifs, les deux rotors étant situés à l'extérieur de la nacelle, en aval ou en amont de la turbomachine.

Quelque soit le type de propulseurs, une boite de vitesse (engrenage entre l'axe de la turbomachine et les rotors) transmet l'énergie mécanique générée par la turbomachine vers les rotors.

Bien que dotée d'un rendement très élevé, cette boîte de vitesse dissipe en chaleur par friction une partie de l'énergie créée par le propulseur. Cette chaleur est en particulier transmise au liquide de lubrification de la boîte de vitesse.

Par ailleurs, la turbomachine elle-même génère une forte dissipation thermique majoritairement par friction mécanique, également au travers de son liquide de lubrification.

On comprend que cette chaleur doit être dissipée vers l'environnement extérieur pour refroidir le propulseur.

Des équipements montés sur la turbomachine, comme un générateur électrique, peuvent également nécessiter un refroidissement.

Diverses solutions ont été développées pour procéder à ce refroidissement.

Une première solution connue, principalement pour les propulseurs de type turbofan, consiste à installer un échangeur thermique dit volumique entre une paroi externe et une paroi interne de la nacelle. Une entrée d'air prélève de l'air froid dans le flux d'air froid traversant la turbomachine, pour l'amener à l'intérieur dudit échangeur volumique. Après avoir traversé la matrice de l'échangeur thermique, l'air est éjecté à l'extérieur de la nacelle par une sortie d'air. De tels échangeurs thermiques ne se révèlent pas être une solution optimale en terme de rendement propulsif et d'impact aérodynamique sur la turbomachine. En effet, le prélèvement d'air constitue une perte directe de rendement propulsif dans la mesure où il ne contribue pas ou peu à la poussée du moteur. Par ailleurs, la présence d'une entrée d'air, d'un ou plusieurs conduits internes, ainsi qu'une sortie d'air engendre des pertes de charges et perturbe de façon plus ou moins significative l'écoulement interne du propulseur.

Une autre solution connue consiste à utiliser un échangeur dit surfacique, tel que par exemple un échangeur à plaques. On connaît notamment un échangeur surfacique épousant localement la forme d'une paroi interne de la nacelle ou du carter moteur à laquelle elle est accolée. Une première face de l'échangeur surfacique est accolée à la paroi interne de la nacelle ou du carter moteur, tandis qu'une seconde face est située dans le flux d'air froid qui traverse le volume interne de la nacelle. La chaleur transportée au sein de l'échangeur est transférée par conduction thermique à la surface interne de la plaque formant la face inférieure de l'échangeur à plaques. Cette plaque chaude est balayée par le flux d'air froid s'écoulant dans la nacelle. La chaleur emmagasinée dans la plaque chaude sur la surface interne est ainsi dissipée par convection forcée vers l'écoulement aérodynamique du propulseur.

Cette solution a toujours un impact aérodynamique mais présente l'avantage, par rapport à la solution précédente, de ne pas prélever d'air dans le flux d'air traversant la turbomachine.

Cette solution ne peut cependant pas être transposable aux propulseurs de type propfan. En effet, lorsque l'aéronef est à vitesse faible ou nulle, il n'y a pas ou peu de flux d'air balayant l'échangeur surfacique, du fait que les rotors sont disposés à l'extérieur de la nacelle.

L'objectif de cette invention est alors de proposer un propulseur comportant un dispositif de refroidissement de la turbomachine qui pallie aux inconvénients précités en assurant un niveau de refroidissement suffisant au sol et en vol tout en limitant l'impact aérodynamique pendant les phases de vol.

A cet effet, l'invention vise un propulseur pour aéronef comportant une turbomachine logée dans une nacelle et un refroidisseur apte à être traversé par un fluide chaud destiné à être refroidi par échange thermique avec un air froid externe au refroidisseur. Le propulseur comporte une veine d'air apte à conduire un air pressurisé vers un conduit d'air réalisé entre une paroi externe et une paroi interne de la nacelle. Le refroidisseur comporte :
- un moyen de refroidissement volumique positionné dans le conduit d'air,
- un moyen de refroidissement surfacique, non connexe audit moyen de refroidissement volumique, disposé au niveau d'une paroi externe de l'aéronef.

Le fluide chaud à refroidir est par exemple l'huile de lubrification de la boîte de vitesse et ou du moteur.

Par non connexe, on entend que les deux moyens de refroidissement ne sont pas attenants l'un à l'autre mais séparés et qu'ils ne sont reliés que par des moyens de conduction du fluide chaud, tels que des circuits d'huile.

En d'autres termes, le refroidisseur travaille selon deux modes possibles : d'une part en échangeur de chaleur volumique, en offrant une grande surface de contact au fluide, d'autre part en échangeur de chaleur surfacique.

Le choix du refroidissement de l'huile par le moyen de refroidissement volumique et/ou surfacique peut être fonction de paramètres de vol, tels que par exemple la phase de vol et/ou le régime moteur et/ou le Mach avion, et/ou de paramètres de fonctionnement de l'aéronef, tels que par exemple la température de l'huile.

Dans la présente description, le choix se fera sur la base des phases de vol de l'aéronef.

Préférentiellement, le moyen de refroidissement surfacique est dimensionné de manière à suffire à assurer seul le refroidissement souhaité lorsque l'aéronef est en vol, dans des conditions d'environnement et de vitesse préalablement choisies, et le moyen de refroidissement volumique est dimensionné de manière à suffire à assurer seul le refroidissement souhaité lorsque l'aéronef est à vitesse nulle ou faible, dans des conditions d'environnement préalablement choisies.

Dans toute la description, le terme amont désignera, en un point considéré, la partie qui est située avant ce point, par référence au sens de circulation de l'air dans le propulseur, et le terme aval désignera la partie qui est située après ce point.

Selon un premier mode de réalisation, une prise d'air pressurisé est disposée au niveau d'un 1^{er} étage d'un compresseur d'air de la turbomachine et la veine d'air associée est débouchante en amont du moyen de refroidissement volumique, de sorte à permettre que le moyen de refroidissement volumique soit parcouru par l'air pressurisé.

Selon un autre mode de réalisation de l'invention, une prise d'air pressurisé est disposée en aval d'un compresseur d'air de la turbomachine et la veine d'air associée est débouchante en aval du moyen de refroidissement volumique, de sorte à permettre la création d'une aspiration en sortie du moyen de refroidissement volumique.

Avantageusement, la veine d'air comporte, au niveau du conduit d'air 20, un tuyau de faible diamètre, ou éjecteur, qui éjecte de l'air sous pression dans ledit conduit d'air.

Selon un autre mode de réalisation de l'invention, le propulseur comporte deux veines d'air et une vanne associée à chaque veine, une veine d'air débouchante en amont du refroidisseur et une veine d'air débouchante en aval du refroidisseur, les vannes régulant l'entrée d'air pressurisé suivant l'une ou l'autre veine d'air.

Préférentiellement, le moyen de refroidissement surfacique est disposé au niveau de la paroi externe de la nacelle ou au niveau d'une paroi externe d'un mât d'accrochage dudit propulseur.

Si la surface disponible du moyen de refroidissement surfacique est suffisante, ledit moyen de refroidissement surfacique pourra présenter une surface plane de manière à minimiser son impact aérodynamique.

Dans un mode de réalisation préféré du moyen de refroidissement surfacique, ledit moyen de refroidissement surfacique est un ensemble d'ailettes s'étendant à partir de la paroi externe de la nacelle ou du mât d'accrochage, et orientées principalement parallèlement au sens d'écoulement de l'air lorsque l'aéronef est au sol.

Alternativement, le conduit d'air comporte une entrée d'air disposée sensiblement à l'avant de la nacelle du propulseur de sorte à créer une entrée d'air additionnelle. Le moyen de refroidissement volumique est ainsi traversé par de l'air froid provenant de l'extérieur du propulseur et de l'air pressurisé provenant du compresseur d'air.

De préférence, le conduit d'air comporte une sortie d'air comportant un moyen de fermeture. Le moyen de fermeture est préférentiellement en position de fermeture lorsque l'aéronef est en vol de sorte à s'affranchir de la traînée engendrée par le conduit d'air.

L'invention vise également un aéronef comportant un propulseur tel qu'exposé.

La description qui va suivre, donnée uniquement à titre d'exemple d'un mode de réalisation de l'invention, est faite en se référant aux figures annexées dans lesquelles :
la figure 1 montre un propulseur de type dit "Propfan", auquel l'invention peut être appliquée,
la figure 2 illustre en vue en coupe très schématisée un tel propulseur,
la figure 3 est une vue de détail de la figure 2, centrée sur la partie avant du propulseur, et qui met en évidence les éléments principaux d'un dispositif de refroidissement selon un premier mode de réalisation de l'invention,
la figure 4 illustre de façon schématique les données traitées par une électronique de contrôle du dispositif de refroidissement selon l'invention,
la figure 5a illustre sur une vue de détail la circulation de l'air dans le refroidisseur lorsque l'aéronef est à basse vitesse, pour le premier mode de réalisation de l'invention,
la figure 5b illustre sur une vue de détail la circulation de l'air dans le refroidisseur lorsque l'aéronef est en vol, pour le premier mode de réalisation de l'invention,
la figure 6a illustre sur une vue de détail la circulation de l'air dans le refroidisseur lorsque l'aéronef est à basse vitesse, selon une variante du premier mode de réalisation de l'invention,
la figure 6b illustre sur une vue de détail la circulation de l'air dans le refroidisseur lorsque l'aéronef est en vol, selon une variante du premier mode de réalisation de l'invention,
la figure 7a est une vue de détail de la figure 2, centrée sur la partie avant du propulseur, et qui met en évidence les éléments principaux du dispositif de refroidissement selon un deuxième mode de réalisation de l'invention,
la figure 7b illustre sur une vue de détail la circulation de l'air dans le refroidisseur lorsque l'aéronef est à basse vitesse, pour le deuxième mode de réalisation de l'invention,
la figure 7c illustre sur une vue de détail la circulation de l'air dans le refroidisseur lorsque l'aéronef est en vol, pour le deuxième mode de réalisation de l'invention,
la figure 8a est une vue de détail de la figure 2, centrée sur la partie avant du propulseur, et qui met en évidence les éléments principaux du dispositif de refroidissement selon un troisième mode de réalisation de l'invention,
la figure 8b illustre sur une vue de détail un premier exemple de circulation de l'air dans le refroidisseur lorsque l'aéronef est à basse vitesse, pour le troisième mode de réalisation de l'invention,
la figure 8c illustre sur une vue de détail un deuxième exemple circulation de l'air dans le refroidisseur lorsque l'aéronef est à basse vitesse, pour le troisième mode de réalisation de l'invention,
la figure 8d illustre sur une vue de détail la circulation de l'air dans le refroidisseur lorsque l'aéronef est en vol, pour le troisième mode de réalisation de l'invention,
la figure 9a illustre sur une vue de détail la circulation de l'air dans le refroidisseur lorsque l'aéronef est à basse vitesse, selon une variante du troisième mode de réalisation de l'invention,
la figure 9b illustre sur une vue de détail la circulation de l'air dans le refroidisseur lorsque l'aéronef est en vol, selon une variante du troisième mode de réalisation de l'invention.

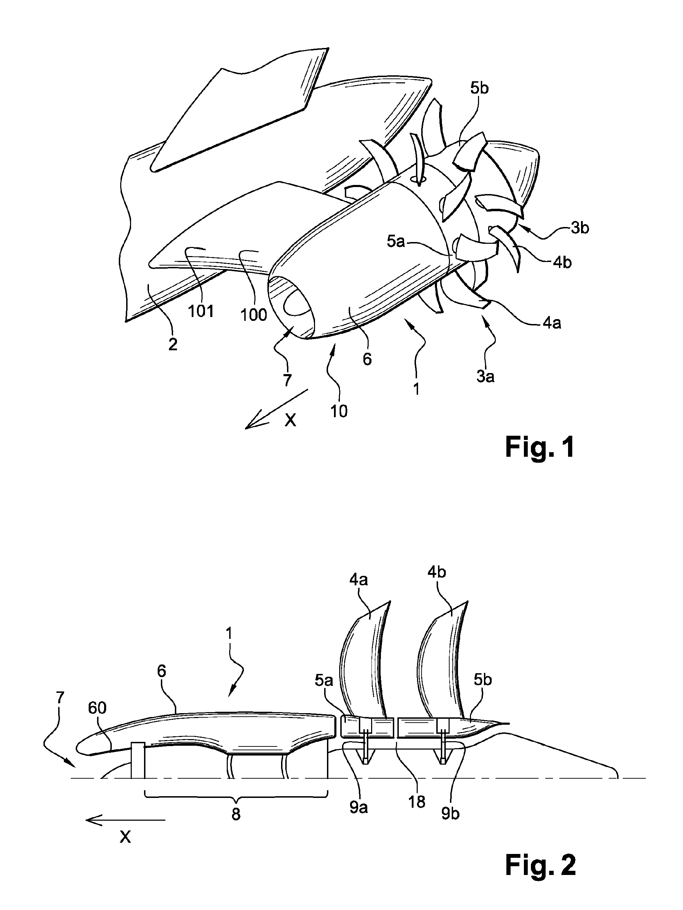

L'invention concerne un propulseur 1 d'aéronef, par exemple de type dit "propfan", tel qu'illustré figure 1. Dans l'exemple de mise en oeuvre illustré ici, deux propulseurs propfan 1, logés chacun dans une nacelle 10, sont fixés, par des mats d'accrochage 100, de part et d'autre d'un fuselage 2 d'un aéronef.

Chaque propulseur propfan 1 comporte ici deux rotors contrarotatifs 3a, 3b comportant chacun un ensemble de pales 4a, 4b équidistantes, et disposés en partie arrière du propulseur 1. Les pales 4a, 4b de chaque rotor 3a, 3b font saillie d'une couronne annulaire 5a, 5b mobile avec ce rotor, dont une surface externe se place dans la continuité d'une paroi externe 6 de la nacelle du propulseur.

Comme on le voit sur la figure 2 de façon schématique, le propulseur propfan 1 comporte une entrée d'air 7 qui alimente une turbomachine 8. Cette turbomachine 8 comporte une partie axiale entraînée en rotation lorsque la turbomachine est en fonctionnement. Cet axe entraîne à son tour, par l'intermédiaire de transmissions mécaniques non illustrées figure 2, les axes 9a, 9b des pales 4a, 4b des deux rotors contrarotatifs 3a, 3b.

Les gaz chauds générés par la turbomachine 8 lors de son fonctionnement sont évacués par une veine chaude annulaire 18 présentant une sortie située à l'arrière des deux rotors 3a, 3b. Dans une variante, ces gaz peuvent également être évacués en amont des deux rotors.

La turbomachine 8 comporte, de façon classique, un compresseur à plusieurs étages permettant des augmentations incrémentales de pression de l'air entrant dans la turbomachine.

Les détails de réalisation des propulseurs propfan et de leurs composants : rotors, turbomachine, transmission, ainsi que leurs dimensions, matériaux etc. sortent du cadre de la présente invention. Les éléments décrits ici ne sont donc donnés qu'à titre informatif facilitant la compréhension de l'invention dans un de ses exemples, nullement limitatif, de mise en oeuvre.

Lors du vol de l'aéronef, l'air extérieur, dont la température est comprise entre +55°C à proximité immédiate du sol et -74°C en altitude, vient circuler le long de la paroi externe 6 de la nacelle 10 du propulseur, sensiblement selon la direction opposée à un axe longitudinal X de déplacement de l'aéronef.

Dans le même temps, le propulseur génère une réjection thermique significative, dont une partie est évacuée par la veine chaude annulaire 18, et une autre partie, transmise aux circuits d'huile du moteur, et de la boîte de vitesse, doit être évacuée par un dispositif de refroidissement approprié.

### Description générale

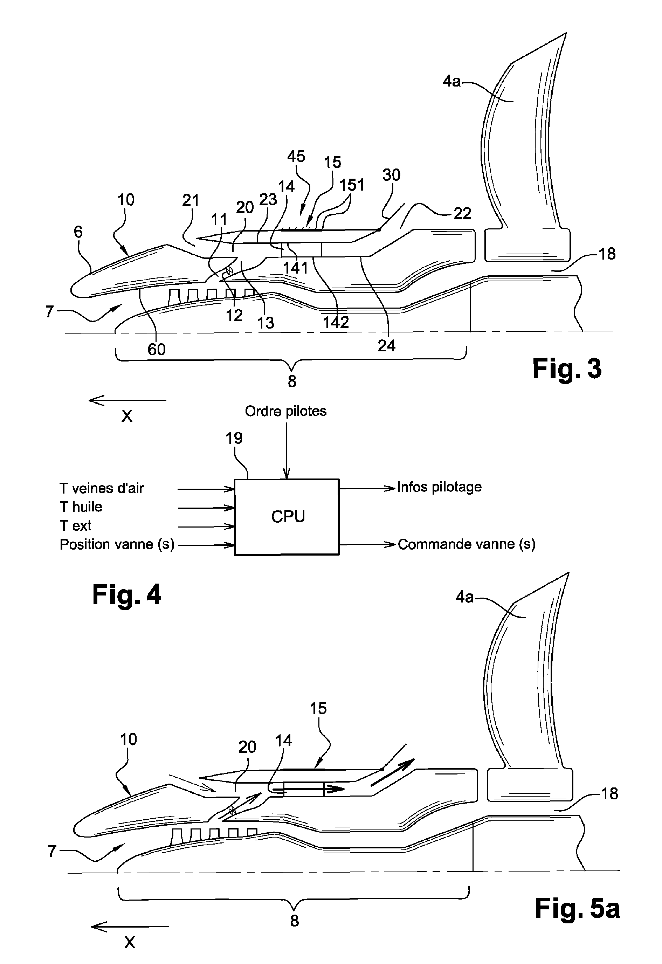

Le dispositif de refroidissement comporte, comme illustré sur la figure 3, un refroidisseur 45 comportant d'une part un moyen de refroidissement volumique 14 et d'autre part un moyen de refroidissement surfacique 15. Les deux moyens de refroidissement 14, 15 sont disjoints l'un de l'autre.

Le moyen de refroidissement volumique 14 est positionné dans un conduit d'air 20 réalisé entre la paroi externe 6 et une paroi interne 60 de la nacelle 10.

Dans un mode de réalisation du conduit d'air, comme illustré sur la figure 3, le conduit d'air 20 est d'une part, débouchant à l'avant de la nacelle du propulseur, par une entrée d'air 21, à proximité de l'entrée d'air principale 7, et d'autre part débouchant à l'extérieur de la nacelle, par une sortie d'air 22, en amont des rotors.

Le moyen de refroidissement volumique 14 est destiné à fonctionner à basse vitesse, par exemple au sol ou au décollage, lorsque le flux d'air extérieur est faible ou nul et qu'un échange de chaleur réalisé sur une très grande surface ménagée dans un volume faible est préférable.

Le moyen de refroidissement volumique 14 est disposé, dans le présent exemple, de telle sorte que
- une première face externe 141 vienne dans le prolongement d'une première paroi 23 du conduit d'air 20, en remplaçant localement cette première paroi,
- une deuxième face externe 142, opposée à la première face externe 141, vienne dans le prolongement d'une deuxième paroi 24 du conduit d'air 20, en remplaçant localement cette deuxième paroi.

La forme du moyen de refroidissement volumique 14 est globalement parallélépipédique, en tout cas déterminée par la forme de la première 23 et deuxième paroi 24 à l'endroit où le moyen de refroidissement volumique 14 doit être installé.

De préférence, les première et deuxième faces externes 141, 142, et par conséquent les première et deuxième parois du conduit d'air, sont sensiblement parallèles entre elles.

Les dimensions du moyen de refroidissement volumique 14 sont déterminées par le besoin de refroidissement lorsque l'aéronef est au sol ou à faible vitesse, par le flux d'air extérieur et par la surface d'échange ménagée au sein du moyen de refroidissement volumique 14. Le calcul en lui-même est connu de l'homme de l'art est n'est donc pas détaillé plus avant ici.

Dans un exemple de réalisation du moyen de refroidissement volumique 14, ledit moyen de refroidissement volumique comporte un ensemble de canaux (non représentés sur les figures) pour le passage de l'air extérieur.

Le moyen de refroidissement 14 est par exemple constitué de lamelles assemblées, qui délimitent ainsi les canaux de passage de l'air extérieur.

Dans un mode de réalisation, les canaux sont sensiblement parallèles entre eux et entre les première et deuxième faces externes 141, 142.

Le moyen de refroidissement volumique 14 est réalisé dans un matériau très bon conducteur thermique, par exemple un alliage métallique, ou un matériau composite adapté à cet usage.

Le moyen de refroidissement surfacique 15 est destiné à fonctionner à haute vitesse, lors des phases de vol, lorsque le flux d'air extérieur est significatif et permet un échange de chaleur sur une surface faible.

Le moyen de refroidissement surfacique 15 est disposé au niveau d'une paroi externe de l'aéronef, par exemple la paroi externe 6 de la nacelle, ou une paroi externe 101 du mât d'accrochage 100 du propulseur.

Dans le présent exemple non limitatif de l'invention, le moyen de refroidissement surfacique 15 est disposé au niveau de la paroi externe 6 de la nacelle 10, à proximité du moyen de refroidissement volumique 14.

De préférence, le moyen de refroidissement surfacique 15 forme une partie de la paroi externe 6 de la nacelle 10. La forme du moyen de refroidissement surfacique 15 est déterminée par la forme de la paroi externe 6 de la nacelle 10 à l'endroit où le moyen de refroidissement surfacique 15 doit être installé.

Dans un exemple de réalisation du moyen de refroidissement surfacique 15, ledit moyen de refroidissement surfacique comporte un ensemble d'ailettes 151 partant de la paroi externe 6 de la nacelle et formant saillie sur la paroi externe 6 de la nacelle 10.

Par exemple, ces ailettes 151 permettent d'augmenter la surface d'échange, et sont orientées sensiblement parallèlement aux lignes d'écoulement d'un flux d'air circulant sur la face externe 6 de la nacelle 10 lorsque l'aéronef est en vol, c'est à dire sensiblement selon l'axe longitudinal X.

Les dimensions de ces ailettes 151 sont déterminées par le besoin de refroidissement lorsque l'aéronef est en vol ou à basse vitesse, et par le flux d'air extérieur et la température de l'air circulant le long de la surface de ces ailettes. Le détail d'un tel calcul est connu de l'homme de l'art.

Les moyens de refroidissement surfacique 15 et volumique 14 sont connus de l'homme de l'art et ne seront pas développés plus avant ici.

Le dispositif de refroidissement est en outre piloté par une électronique de contrôle 19, (illustrée figure 4), de type connu en soi.

Ladite électronique de contrôle 19 reçoit en entrée, dans le présent exemple nullement limitatif, des données de température des circuits d'huile que le dispositif de refroidissement doit réguler, ainsi que des données de température d'air extérieur.

Ladite électronique de contrôle 19 émet des données de contrôle, par exemple température des circuits d'huile, vers le poste de pilotage de l'appareil, dont elle reçoit également des instructions.

Cette électronique de contrôle 19 peut être installée au niveau du propulseur 1, par exemple à proximité immédiate du moyen de refroidissement volumique 14 ou du moyen de refroidissement surfacique 15. Alternativement, l'électronique de contrôle 19 peut faire partie des divers équipements électroniques situés dans le poste de pilotage, ou être simplement une des fonctions gérées par un des calculateurs multifonctions usuellement présents à bord des aéronefs.

Dans une variante de réalisation, le dispositif de refroidissement comporte une vanne de régulation (non représentée sur les figures), dite vanne de régulation du flux d'huile, adaptée à piloter le flux d'huile à refroidir soit en direction du moyen de refroidissement volumique 14 soit en direction du moyen de refroidissement surfacique 15, en fonction de la vitesse, basse ou haute, de l'aéronef. Ladite vanne de régulation du flux d'huile est commandée par l'électronique de commande 19.

Dans une variante de réalisation de l'invention, le conduit d'air 20 comporte, au niveau de la sortie d'air 22, un moyen de fermeture 30 de ladite sortie. Ce moyen de fermeture est commandé par l'électronique de contrôle 19.

Dans un exemple de réalisation, le moyen de fermeture 30 est un clapet.

### Premier mode de réalisation

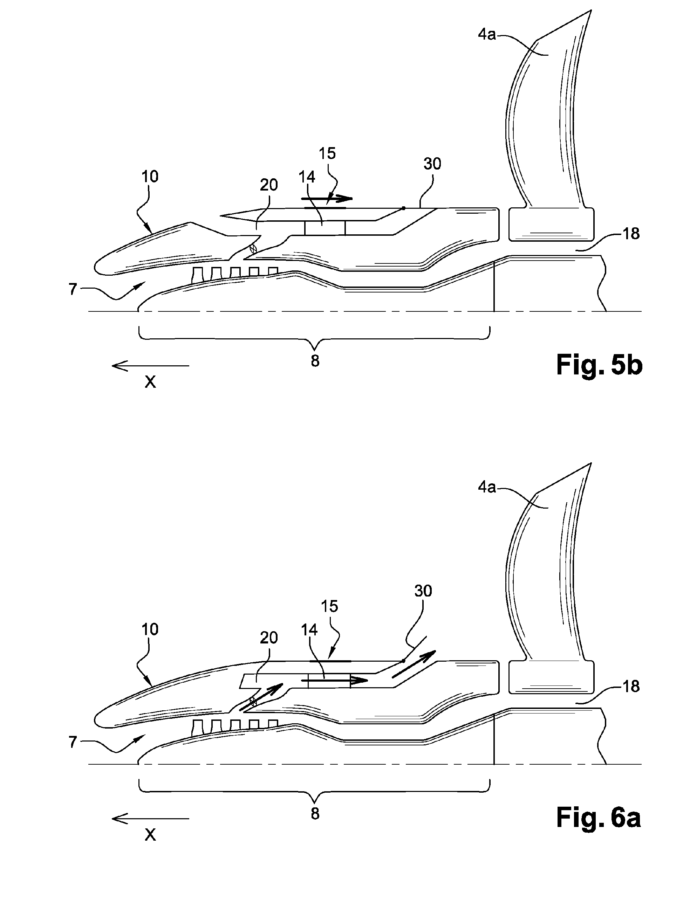

Dans un premier mode de réalisation du dispositif de refroidissement, ledit dispositif de refroidissement, comme illustré sur les figures 3, 5a et 5b, tire parti de la présence du compresseur, et comporte une prise d'air 11, de type connu en soi, disposée, dans le présent exemple non limitatif, au niveau d'un premier étage du compresseur de la turbomachine 8. Cette disposition est destinée à fournir un air mais encore peu réchauffé par la compression, au contraire de l'air situé au niveau des étages suivants du compresseur.

La position du point de prélèvement dépend naturellement des caractéristiques spécifiques de la turbomachine 8 considérée, et de son compresseur, mais cette position est dictée par le besoin d'air à une pression suffisante pour amener un flux d'air prédéterminé vers le refroidisseur 45, et à une température suffisamment basse, tout en ne perturbant pas le fonctionnement correct du compresseur et plus généralement de la turbomachine 8.

De préférence, cette prise d'air 11 comporte une vanne de régulation 12, ici illustrée de façon schématique, adaptée à piloter le flux d'air pressurisé, prélevé au niveau de la prise d'air 11, entre une valeur quasiment nulle et une valeur maximale déterminée en fonction du besoin de refroidissement de l'huile de la boîte de vitesse et/ou du moteur et/ou du générateur électrique.

Une veine d'air 13 disposée en aval de la vanne de régulation 12 conduit le flux d'air pressurisé prélevé vers le conduit d'air 20 en amont du moyen de refroidissement volumique 14.

L'électronique de contrôle 19 contrôle la vanne de régulation 12 selon diverses informations d'entrée. Elle reçoit des données de température d'air dans la veine 13 ainsi que des informations d'état de la vanne de régulation 12.

En fonctionnement, lorsque l'aéronef est au sol, ou dans les phases de roulage, de décollage ou d'approche, avec les propulseurs en marche, les réjections thermiques de l'ensemble propulsif sont très importantes et la vitesse de l'aéronef faible ou nulle.

Durant ces phases, dites phases basses vitesses, le flux d'air extérieur est faible, et insuffisant pour un refroidissement par les moyens de refroidissement volumique 14 et surfacique 15.

L'électronique de commande 19 pilote la vanne de régulation 12 en position d'ouverture sensiblement maximale, permettant au moyen de refroidissement volumique 14 d'être parcouru par l'air extérieur et par l'air pressurisé prélevé au niveau du compresseur. Le refroidissement est fait par les deux moyens de refroidissement volumique 14 et surfacique 15, principalement par le moyen de refroidissement volumique 14.

Ceci assure ainsi un échange thermique entre le moyen de refroidissement volumique 14 chaud, l'air extérieur et l'air pressurisé froid, provoquant le refroidissement souhaité du moyen de refroidissement volumique 14 et de l'huile circulant à l'intérieur ou reliée à lui par conduction thermique.

Au fur et à mesure de la montée et de l'évolution vers le vol en palier, la vitesse de l'aéronef augmente et la température extérieure de l'air diminue. En conséquence, le prélèvement d'air au niveau du compresseur est réduit par une fermeture progressive de la vanne de régulation 12 commandée par l'électronique de contrôle 19 et le refroidissement se fait de plus en plus d'une part par le moyen de refroidissement surfacique 15 balayé par l'air extérieur et d'autre part par le moyen de refroidissement volumique 14 balayé par l'air extérieur circulant naturellement dans le conduit d'air 20.

La fermeture (par extension l'ouverture) de la vanne 12 est décrite pour être progressive mais il est également possible que la fermeture (par extension l'ouverture) de la vanne soit commandée en tout ou rien.

Par la suite, lorsque l'aéronef est en vol stabilisé, le refroidissement est fait normalement par les moyens de refroidissement volumique 14 et surfacique 15, principalement par le moyen de refroidissement surfacique 15, et la vanne de régulation 12 reste alors fermée, ce qui supprime le prélèvement d'air sur le compresseur, et réduit donc la surconsommation de carburant qu'entraîne autrement ce prélèvement de puissance.

Lorsque le conduit d'air 20 comporte le moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

Dans une variante de réalisation du premier mode, lorsque le dispositif de refroidissement comporte la vanne de régulation du flux d'huile, l'électronique de commande 19 pilote ladite vanne de régulation du flux d'huile de sorte à diriger le flux d'huile uniquement vers le moyen de refroidissement volumique 14. Le refroidissement est fait alors uniquement par le moyen de refroidissement volumique 14 (figure 5a).

Au fur et à mesure de la montée et de l'évolution vers le vol en palier, l'électronique de commande 19 pilote progressivement la vanne de régulation du flux d'huile de sorte à diriger le flux d'huile vers le moyen de refroidissement surfacique 15.

Lorsque l'aéronef est en vol stabilisé, le refroidissement est fait uniquement par le moyen de refroidissement surfacique 15 (figure 5b) et la vanne de régulation 12 reste alors fermée.

Lorsque le conduit d'air 20 comporte le moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

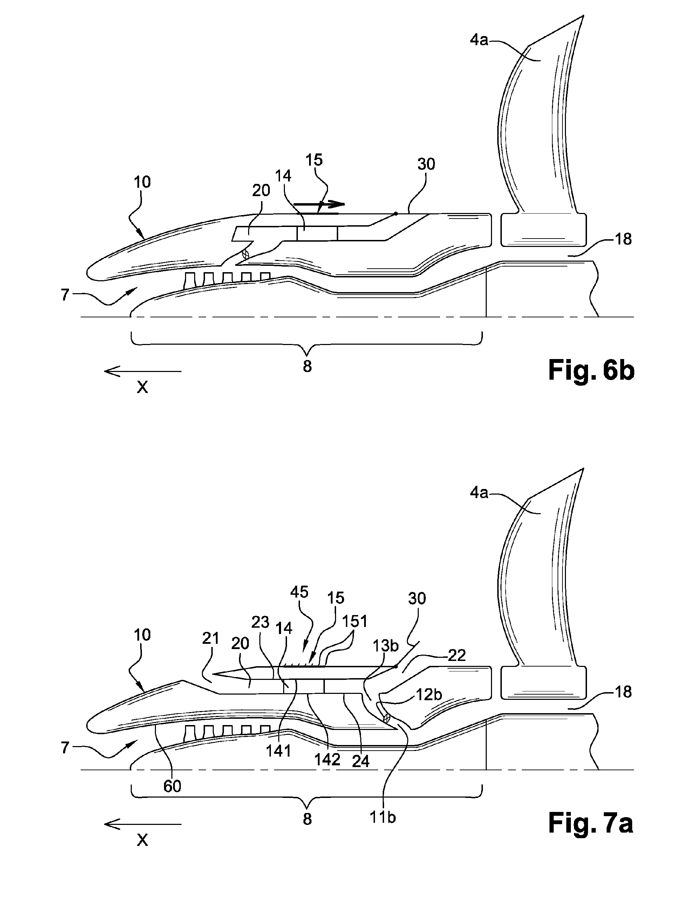

Dans une autre variante de réalisation du premier mode, comme illustré sur les figures 6a et 6b, le conduit d'air 20 est non débouchant, par exemple au moyen d'un moyen de fermeture de l'entrée d'air 21, vers l'avant de la nacelle 10, de sorte à réduire la traînée aérodynamique induite par l'entrée d'air.

Durant les phases basses vitesses, l'électronique de commande 19 pilote la vanne de régulation 12 est en position d'ouverture sensiblement maximale et l'air froid pressurisé circule dans le conduit d'air 20. Les moyens de refroidissement volumique 14 et surfacique 15 sont fonctionnels.

Lorsque le dispositif de refroidissement comporte la vanne de régulation du flux d'huile, l'électronique de commande 19 pilote ladite vanne de régulation du flux d'huile de sorte à diriger le flux d'huile vers le moyen de refroidissement volumique 14. Seul le moyen de refroidissement volumique 14 est fonctionnel, et il est parcouru par l'air pressurisé prélevé au niveau du compresseur (illustrée figure 6a).

Lorsque le conduit d'air 20 comporte en outre le moyen de fermeture 30 de la sortie d'air 22, ledit moyen de fermeture est en position d'ouverture.

Durant la phase de vol, l'électronique de commande 19 pilote la vanne de régulation 12 en position de fermeture et le refroidissement de l'huile est réalisé seulement par le moyen de refroidissement surfacique 15.

Lorsque le dispositif de refroidissement comporte la vanne de régulation du flux d'huile, l'électronique de commande 19 pilote ladite vanne de régulation du flux d'huile de sorte à diriger le flux d'huile vers le moyen de refroidissement surfacique 15. Seul le moyen de refroidissement volumique 15 est fonctionnel, et il est parcouru par l'air extérieur (figure 6b).

Lorsque le conduit d'air 20 comporte le moyen de fermeture 30 de la sortie d'air 22, ledit moyen de fermeture est de préférence en position de fermeture.

### Deuxième mode de réalisation

Dans un deuxième mode de réalisation du dispositif de refroidissement, comme illustré sur les figures 7a à 7c, ledit dispositif de refroidissement comporte une prise d'air 11 b, de type connu en soi, disposée, dans le présent exemple non limitatif, en aval du compresseur de la turbomachine 8.

De préférence, cette prise d'air 11 b comporte une vanne de régulation 12b, ici illustrée de façon schématique, adaptée à piloter le flux d'air pressurisé, prélevé au niveau de la prise d'air 11 b, entre une valeur quasiment nulle et une valeur maximale déterminée en fonction du besoin de refroidissement de l'huile de la boîte de vitesse et/ou du moteur et/ou du générateur électrique.

Une veine d'air 13b disposée en aval de la vanne de régulation 12b conduit le flux d'air pressurisé prélevé vers le conduit d'air 20 réalisé dans la nacelle 10, en aval du moyen de refroidissement volumique 14, et crée une aspiration de l'air extérieur issu de l'entrée d'air 21 dans le conduit d'air, traversant ledit moyen de refroidissement volumique 14.

Avantageusement, la veine d'air 13b se termine, au niveau du conduit d'air 20, par un tuyau de faible diamètre, ou éjecteur (non représenté sur les figures), qui éjecte de l'air sous pression dans le conduit d'air 20. L'éjection de l'air sous pression produit une accélération du flux d'air externe provenant du conduit d'air 20 par une phénomène d'aspiration et par conséquent une augmentation du débit d'air traversant le moyen de refroidissement volumique 14.

Dans ce deuxième mode de réalisation, l'électronique de contrôle 19 contrôle la vanne de régulation 12b selon diverses informations d'entrée. Elle reçoit des données de température d'air dans la veine d'air 13b ainsi que des informations d'état de la vanne de régulation 12b.

En fonctionnement, lorsque l'aéronef est en phase basses vitesses, les réjections thermiques de l'ensemble propulsif sont très importantes et la vitesse de l'aéronef faible ou nulle.

Durant ces phases basses vitesses, le flux d'air extérieur est faible, et insuffisant pour un refroidissement par les moyens de refroidissement volumique 14 et surfacique 15.

L'électronique de commande 19 pilote la vanne de régulation 12b en position d'ouverture sensiblement maximale, permettant de créer une aspiration de l'air extérieur traversant le moyen de refroidissement volumique 14 en sortie du conduit d'air. Le refroidissement est fait par les deux moyens de refroidissement volumique 14 et surfacique 15, principalement par le moyen de refroidissement volumique 14.

Ceci assure ainsi un échange thermique entre le moyen de refroidissement volumique 14 chaud, l'air extérieur et l'air pressurisé froid, provoquant le refroidissement souhaité du moyen de refroidissement volumique 14 et de l'huile circulant à l'intérieur ou reliée à lui par conduction thermique.

Au fur et à mesure de la montée et de l'évolution vers le vol en palier, la vitesse de l'aéronef augmente et la température extérieure de l'air diminue. En conséquence, le prélèvement d'air au niveau du compresseur est réduit par une fermeture progressive de la vanne de régulation 12b commandée par l'électronique de contrôle 19 et le refroidissement se fait de plus en plus d'une part par le moyen de refroidissement surfacique 15 balayé par l'air extérieur et d'autre part par le moyen de refroidissement volumique 14 balayé par l'air extérieur circulant naturellement dans le conduit d'air 20.

La fermeture (par extension l'ouverture) de la vanne 12b est décrite pour être progressive mais il est également possible que la fermeture (par extension l'ouverture) de la vanne soit commandée en tout ou rien.

Par la suite, lorsque l'aéronef est en vol stabilisé, le refroidissement est fait normalement par les moyens de refroidissement volumique 14 et surfacique 15, principalement par le moyen de refroidissement surfacique 15, et la vanne de régulation 12b reste alors fermée, ce qui supprime le prélèvement d'air sur le compresseur, et réduit donc la surconsommation de carburant qu'entraîne autrement ce prélèvement de puissance.

Lorsque le conduit d'air 20 comporte le moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

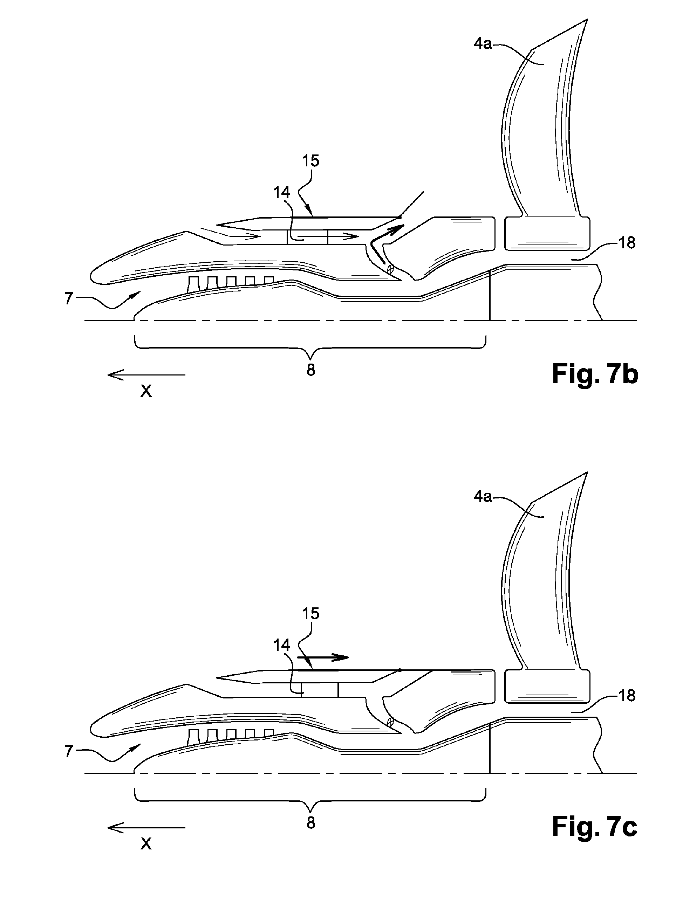

Dans une variante de réalisation du deuxième mode, lorsque le dispositif de refroidissement comporte la vanne de régulation du flux d'huile, l'électronique de commande 19 pilote ladite vanne de régulation du flux d'huile de sorte à diriger le flux d'huile uniquement vers le moyen de refroidissement volumique 14. Le refroidissement de l'huile est fait alors uniquement par le moyen de refroidissement volumique 14 (figure 7b).

Au fur et à mesure de la montée et de l'évolution vers le vol en palier, l'électronique de commande 19 pilote progressivement la vanne de régulation du flux d'huile de sorte à diriger le flux d'huile vers le moyen de refroidissement surfacique 15.

Lorsque l'aéronef est en vol stabilisé, le refroidissement est fait uniquement par le moyen de refroidissement surfacique 15 (figure 7c) et la vanne de régulation 12b reste alors fermée.

Lorsque le conduit d'air 20 comporte le moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

### Troisième mode de réalisation

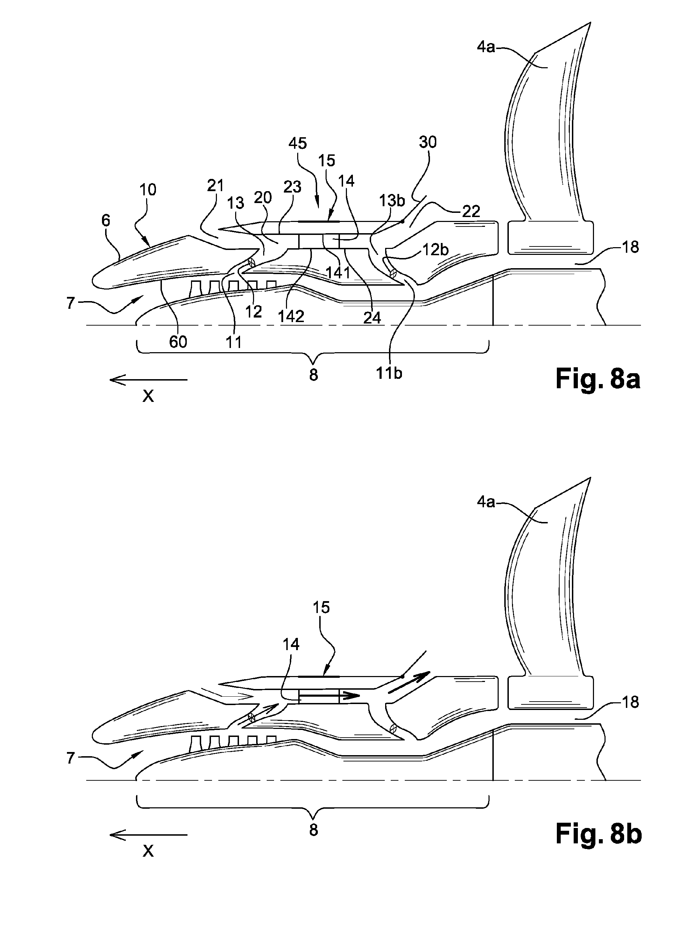

Dans un troisième mode de réalisation du dispositif de refroidissement, le dispositif de refroidissement, comme illustré sur les figures 8a à 8d, comporte la prise d'air 11, la vanne de régulation 12 et la veine d'air 13, telles que décrites dans le premier mode de réalisation.

Le dispositif de refroidissement comporte en outre la prise d'air 11 b, la vanne de régulation 12b et la veine d'air 13b telles que décrites dans le deuxième mode de réalisation.

Avantageusement, la veine d'air 13b se termine, au niveau du conduit d'air 20, par un éjecteur, qui éjecte de l'air sous pression dans le conduit d'air 20.

Dans ce troisième mode de réalisation, l'électronique de contrôle 19 contrôle les vannes de régulation 12 et 12b selon diverses informations d'entrée.

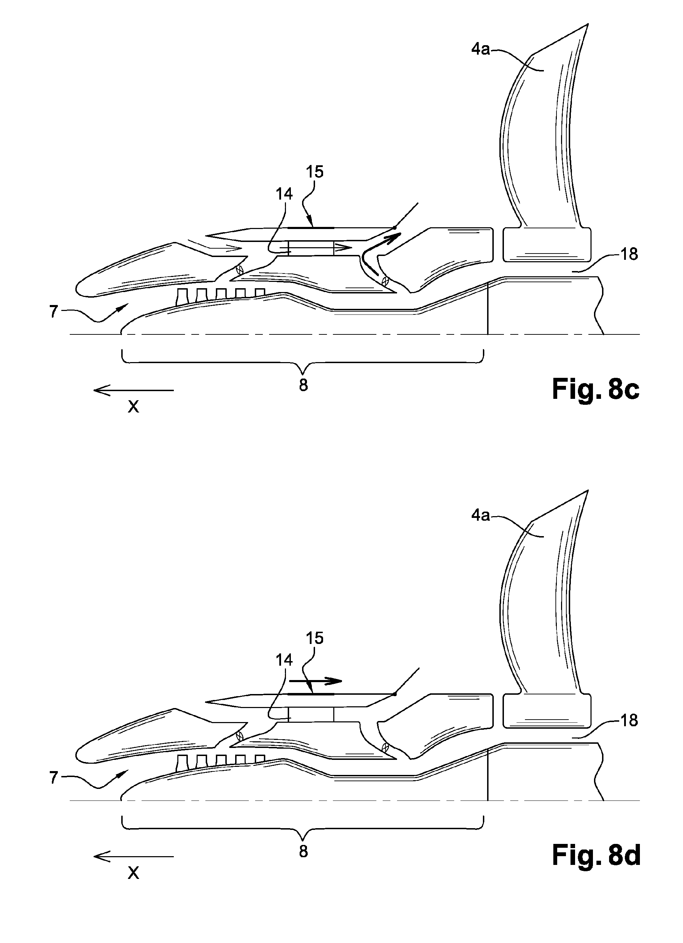

En fonctionnement lorsque l'aéronef est en phase basses vitesses (figures 8b et 8c), les réjections thermiques du générateur électrique sont très importantes et la vitesse de l'aéronef faible ou nulle.

Durant ces phases basses vitesses, le flux d'air extérieur est faible, et insuffisant pour un refroidissement par le seul moyen de refroidissement surfacique 15.

L'électronique de commande 19 pilote l'une des deux vannes de régulation 12, 12b, en position d'ouverture sensiblement maximale. Les deux vannes ne peuvent être simultanément en position d'ouverture. Lorsque l'électronique de commande 19 pilote la vanne de régulation 12 en position d'ouverture et la vanne de régulation 12b en position de fermeture, le moyen de refroidissement volumique 14 est parcouru par l'air extérieur et par l'air pressurisé prélevé au niveau du compresseur. Le refroidissement est fait par les deux moyens de refroidissement volumique 14 et surfacique 15, principalement par le moyen de refroidissement volumique 14. Lorsque l'électronique de commande 19 pilote la vanne de régulation 12 en position de fermeture et la vanne de régulation 12b en position d'ouverture, une aspiration de l'air extérieur est crée en sortie du moyen de refroidissement volumique 14. Le refroidissement de l'huile est fait par les deux moyens de refroidissement volumique 14 et surfacique 15, principalement par le moyen de refroidissement volumique 14.

Ceci assure ainsi un échange thermique entre le moyen de refroidissement volumique 14 chaud, l'air extérieur et l'air pressurisé froid, provoquant le refroidissement souhaité du moyen de refroidissement volumique 14 et de l'huile circulant à l'intérieur ou reliée à lui par conduction thermique.

Au fur et à mesure de la montée et de l'évolution vers le vol en palier, la vitesse de l'aéronef augmente et la température extérieure de l'air diminue. En conséquence, le prélèvement d'air au niveau du compresseur est réduit par une fermeture progressive de la vanne de régulation ouverte 12 ou 12b commandée par l'électronique de contrôle 19. Le refroidissement de l'huile se fait de plus en plus d'une part par le moyen de refroidissement surfacique 15 balayé par l'air extérieur et d'autre part par le moyen de refroidissement volumique 14 balayé par l'air extérieur circulant naturellement dans le conduit d'air 20.

La fermeture (par extension l'ouverture) des vannes 12, 12b est décrite pour être progressive mais il est également possible que la fermeture (par extension l'ouverture) des vannes soit commandée en tout ou rien.

Par la suite, lorsque l'aéronef est en vol stabilisé, le refroidissement est fait normalement par les moyens de refroidissement volumique 14 et surfacique 15, principalement par le moyen de refroidissement surfacique 15, et les vannes de régulation 12 et 12b restent alors fermées, ce qui supprime le prélèvement d'air sur le compresseur, et réduit donc la surconsommation de carburant qu'entraîne autrement ce prélèvement de puissance.

Lorsque le conduit d'air 20 comporte un moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

Dans une variante de réalisation du troisième mode, lorsque le dispositif de refroidissement comporte la vanne de régulation du flux d'huile, l'électronique de commande 19 pilote ladite vanne de régulation du flux d'huile de sorte à diriger le flux d'huile uniquement vers le moyen de refroidissement volumique 14. Le refroidissement de l'huile est fait alors uniquement par le moyen de refroidissement volumique 14 (figure 8b et 8c).

Au fur et à mesure de la montée et de l'évolution vers le vol en palier, l'électronique de commande 19 pilote progressivement la vanne de régulation du flux d'huile de sorte à diriger le flux d'huile vers le moyen de refroidissement surfacique 15.

Lorsque l'aéronef est en vol stabilisé, le refroidissement est fait uniquement par le moyen de refroidissement surfacique 15 (figure 8d) et les deux vannes de régulation 12, 12b restent alors fermées.

Lorsque le conduit d'air 20 comporte le moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

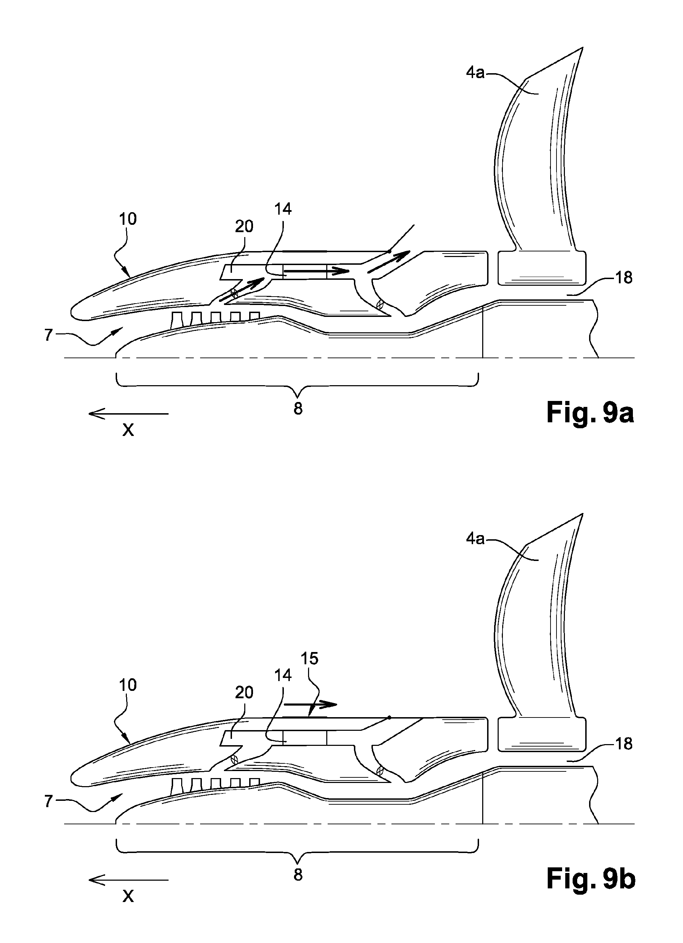

Dans une autre variante de réalisation de ce troisième mode, comme illustré sur les figures 9a et 9b, le conduit d'air 20 est non débouchant, par exemple au moyen d'un moyen de fermeture de l'entrée d'air 21, vers l'avant de la nacelle 10, de sorte à réduire la traînée aérodynamique induite par l'entrée d'air.

Dans cette variante de réalisation, que ce soit pour les phases basses vitesses ou en vol, la vanne de régulation 12b est toujours en position de fermeture.

Durant les phases basses vitesses, l'électronique de commande 19 pilote la vanne de régulation 12 en position d'ouverture sensiblement maximale et l'air froid pressurisé circule dans le conduit d'air 20. Les moyens de refroidissement volumique 14 et surfacique 15 sont fonctionnels.

Lorsque le dispositif de refroidissement comporte la vanne de régulation du flux d'huile, l'électronique de commande 19 pilote ladite vanne de régulation du flux d'huile de sorte à diriger le flux d'huile vers le moyen de refroidissement volumique 14. Seul le moyen de refroidissement volumique 14 est fonctionnel, et il est parcouru par l'air pressurisé prélevé au niveau du compresseur (illustré figure 9a).

Lorsque le conduit d'air 20 comporte en outre le moyen de fermeture 30 de la sortie d'air 22, ledit moyen de fermeture est en position d'ouverture.

Durant la phase de vol, l'électronique de commande 19 pilote la vanne de régulation 12 en position de fermeture et le refroidissement de l'huile est réalisé seulement par le moyen de refroidissement surfacique 15.

Lorsque le dispositif de refroidissement comporte la vanne de régulation du flux d'huile, l'électronique de commande 19 pilote ladite vanne de régulation du flux d'huile de sorte à diriger le flux d'huile vers le moyen de refroidissement surfacique 15. Seul le moyen de refroidissement volumique 15 est fonctionnel, et il est parcouru par l'air extérieur (figure 9b).

Lorsque le conduit d'air 20 comporte le moyen de fermeture 30 de la sortie d'air 22, ledit moyen de fermeture est de préférence en position de fermeture.

La portée de la présente invention ne se limite pas aux détails des formes de réalisation ci-dessus considérées à titre d'exemple, mais s'étend au contraire aux modifications à la portée de l'homme de l'art.

L'invention est décrite dans le cas d'un propulseur de type propfan, mais l'invention est aussi applicable à des propulseurs de type turbofan.

Il ressort de la description que le dispositif de refroidissement permet de refroidir les composants moteur sur toutes les phases, basses vitesses et vol.

Le fait de gérer l'ouverture et la fermeture des vannes de régulation 12, 12b lors de la phase basse vitesse et en cours de vol permet de piloter le prélèvement de puissance sur le compresseur, et de le réduire dans la mesure du possible, ce qui se traduit en une réduction de consommation.

## Revendications

1. Propulseur (1) pour aéronef comportant une turbomachine (8) logée dans une nacelle (10) et un refroidisseur (45) apte à être traversé par un fluide chaud destiné à être refroidi par échange thermique avec un air froid externe audit refroidisseur, le propulseur (1) comportant une veine d'air (13)(13b) apte à conduire un air pressurisé vers un conduit d'air (20) réalisé entre une paroi externe (6) et une paroi interne (60) de la nacelle (10), le refroidisseur (45) comportant :
- un moyen de refroidissement volumique (14) positionné dans le conduit d'air (20),
- un moyen de refroidissement surfacique (15), non connexe audit moyen de refroidissement volumique, disposé au niveau d'une paroi externe de l'aéronef,
**caractérisé en ce que** le conduit d'air (20) comporte une entrée d'air (21) disposée sensiblement à l'avant de la nacelle (10) du propulseur (1).

2. Propulseur pour aéronef selon la revendication 1, **caractérisé en ce que** :
- le moyen de refroidissement surfacique (15) est dimensionné de manière à suffire à assurer seul le refroidissement souhaité lorsque l'aéronef est en vol, dans des conditions d'environnement et de vitesse préalablement choisies,
- le moyen de refroidissement volumique (14) est dimensionné de manière à suffire à assurer seul le refroidissement souhaité lorsque l'aéronef est à vitesse nulle ou faible, dans des conditions d'environnement préalablement choisies.

3. Propulseur pour aéronef selon l'une quelconque des revendications précédentes, **caractérisé en ce qu'**une prise d'air pressurisé (11) est disposée au niveau d'un 1^{er} étage d'un compresseur d'air de la turbomachine (8) et **en ce que** la veine d'air associée (13) est débouchante en amont du moyen de refroidissement volumique (14).

4. Propulseur pour aéronef selon l'une des revendications 1 à 2, **caractérisé en ce qu'**une prise d'air pressurisé (11 b) est disposée en aval d'un compresseur d'air de la turbomachine (8) et **en ce que** la veine d'air associée (13b) est débouchante en aval du moyen de refroidissement volumique (14).

5. Propulseur pour aéronef selon la revendication 4 **caractérisé en ce que** la veine d'air (13b) comporte, au niveau du conduit d'air (20), un éjecteur qui éjecte de l'air sous pression dans ledit conduit d'air.

6. Propulseur pour aéronef selon l'une des revendications 1 à 2, comportant deux veines d'air (13, 13b) et une vanne (12, 12b) associée à chaque veine, une veine d'air (13) débouchante en amont du refroidisseur (14) et une veine d'air (13b) débouchante en aval du refroidisseur, les vannes (12, 12b) régulant l'entrée d'air pressurisé suivant l'une ou l'autre veine d'air.

7. Propulseur pour aéronef selon l'une quelconque des revendications précédentes, **caractérisé en ce que** le moyen de refroidissement surfacique (15) est disposé au niveau de la paroi externe (6) de la nacelle (10) ou d'une paroi externe (101) d'un mât d'accrochage (100) dudit propulseur.

8. Propulseur pour aéronef selon l'une quelconque des revendications précédentes, **caractérisé en ce que** le moyen de refroidissement surfacique (15) est un ensemble d'ailettes s'étendant à partir de la paroi externe (6, 101), et orientées principalement parallèlement au sens d'écoulement de l'air lorsque l'aéronef est au sol.

9. Aéronef comportant un propulseur selon l'une quelconque des revendications précédentes.
